# EUROPÄISCHE PATENTSCHRIFT

(11) **EP 3 218 327 B1**
(45) Veröffentlichungstag und Bekanntmachung des Hinweises auf die Patenterteilung: **20.11.2019**
(21) Anmeldenummer: 15797006.2
(22) Anmeldetag: 22.10.2015
(51) Int. Cl.: C04B 41/50, C04B 41/68

(54) **ZUSAMMENSETZUNG ZUR HYDROPHOBIERUNG EINES SUBSTRATS UND DEREN VERWENDUNG**
COMPOSITION FOR THE HYDROPHOBIZATION OF A SUBSTRATE AND USE THEREOF
COMPOSITION POUR L'IMPERMÉABILISATION D'UN SUBSTRAT ET UTILISATION DE LADITE COMPOSITION

(30) Priorität: 13.11.2014 DE 102014116614
(43) Veröffentlichungstag der Anmeldung: 20.09.2017
(73) Patentinhaber: Köster Bauchemie AG, 26607 Aurich (DE)
(72) Erfinder: WIRRINGA, Uwe, 26524 Berumbur (DE)
(74) Vertreter: Scholz, Volker
(86) Internationale Anmeldenummer: PCT/DE2015/100443
(87) Internationale Veröffentlichungsnummer: WO 2016/074664

(56) Entgegenhaltungen:
- DE-A1-102005 040 965
- US-A1- 2009 005 494
- DATABASE WPI Week 201514 Thomson Scientific, London, GB; AN 2015-07853V XP002752801, -& CN 104 177 126 A (NANXIONG DINGCHENG CHEM CO LTD) 3. Dezember 2014 (2014-12-03)

## Beschreibung

Wasser-in-Öl Emulsionen finden nicht nur breite Anwendung zum Beispiel in dem Bereich der Kosmetik, sondern sind auch zur Behandlung von mineralischen Baustoffoberflächen oder als Holzschutzmittel bekannt. Mit diesem Emulsionstyp ist es möglich, cremeartige beziehungsweise pastöse Zubereitungen herzustellen, bei denen die Wirkstoffe unter anderem in der kontinuierlichen Ölphase verteilt sind. Die Ölphase zeichnet sich im Vergleich zu der wässrigen Phase durch eine niedrige Oberflächenspannung aus, die eine Penetration oder Verteilung der Wirkstoffe erleichtert. Der Zweck der Verwendung einer entsprechenden Zusammensetzung besteht in der hydrophobierenden Imprägnierung, das heißt der Reduktion der Wasseraufnahme oder des Eindringens sonstiger in Wasser gelöster unerwünschter Stoffe in einen porösen Baustoff, wie beispielsweise Beton, Zement, Naturstein, Holz, und so weiter.

Bewertungskriterien für eine Zusammensetzung zur Hydrophobierung sind die Wirksamkeit und Dauerhaftigkeit. Für die Wirksamkeit einer Betonhydrophobierung ist die Reduktion der Wasseraufnahme unter einen Grenzwert von 0,1 kg/(m²h^{½}) entscheidend und wird gemäß EN 1504-2 bestimmt. Die Dauerhaftigkeit einer Hydrophobierungsmaßnahme wird über die Eindringtiefe des Hydrophobierungsmittels in den Baustoff beurteilt. Es werden Imprägnierungen mit einer Eindringtiefe < 10 mm und > 10 mm gemäß EN 1504-2 unterschieden. Letztere zeigen eine längere Lebensdauer. Der Kontaktwinkel, der sich nach der Hydrophobierung zwischen dem behandelten Substrat und einem aufgesetzten Wassertropfen ausbildet, ist ein Qualitätskriterium.

In der Literatur sind sowohl Verfahren, bei denen die Imprägnierungsmittel flächig auf der Oberfläche des Baustoffs aufgetragen werden, wie auch Verfahren zur Injektion der Hydrophobierungszusammensetzung über Bohrlöcher in das Mauerwerk, zum Beispiel DE 19513238, bekannt. Der Zweck einer Injektion gegen aufsteigende Feuchtigkeit ist die Unterbrechung des kapillaren Feuchtetransports entgegen der Schwerkraft über den Querschnitt eines Wandbildners, also zum Beispiel einer Ziegelmauer.

Bei den bisher bekannten und üblichen Hydrophobierungszusammensetzungen werden Kombinationen aus monomeren und polymeren Organosiliziumverbindungen genutzt, die meist weiter Bestandteile wie organische Lösungsmittel, Kohlenwasserstoffe oder Silikonöle aufweisen, siehe US 2009/005494, DE 19628035, DE 19904496, DE 10203247, DE 10130091 und DE 19945305. Aus der EP 1679166 A2 sind Holzschutzmittel unter Einsatz entsprechender organischer Siliziumverbindungen bekannt. Die Hydrophobierungsmittel reagieren einerseits mit dem Baustoff und in dem Baustoff beziehungsweise mit der in der Luft enthaltenen Feuchtigkeit zu polymeren und hydrophoben Netzwerken, zerfallen gegebenenfalls und hinterlassen andererseits im Verlauf der Trocknung eine polymere und hydrophobe Schicht auf dem Baustoff, die unter Umständen wieder entfernt werden muss oder Farb- oder Glanzveränderungen auf den behandelten Baustoffoberflächen hervorrufen kann.

Den Imprägnierungen aus dem Stand der Technik ist dabei gemein, dass sie häufig keine oder nur sehr geringe Feststoffmengen enthalten, da die Abscheidung von Feststoffen auf der Baustoffoberfläche wenig wünschenswert erscheint. Zudem ist vielen Imprägnierungen, insbesondere solchen, die tief in mineralische Baustoffe eindringen sollen, gemein, dass sie Kohlenwasserstofflösungsmittel enthalten, die zu einer besseren Benetzung des Baustoffs und damit zu einem tieferen Eindringen in den Baustoff führen sollen.

Nachteilig bei den bekannten Hydrophobierungszusammensetzungen ist femer, dass eine Kombination aus unterschiedlichen Leistungseigenschaften nicht erreicht werden kann, wie beispielsweise ein tiefes Eindringen eines Wirkstoffs in Kombination mit einer in Oberflächennähe wirkenden Komponente. Dabei ist insbesondere nachteilig, dass bei den bekannten Hydrophobierungszusammensetzungen keine Reduktion des Porenvolumens poröser Substrate erreicht werden kann. Auch verwenden bekannte Hydrophobierungszusammensetzungen häufig hohe Anteile an monomeren und polymeren Organosiliziumverbindungen. Monomere Organosiliziumverbindungen sind jedoch flüchtig und beeinträchtigen somit die Raumluftqualität bei der Anwendung in Innenräumen. Des Weiteren werden polymere Organosiliziumverbindungen, wie Polysiloxane, eingesetzt, die in einigen Einsatzbereichen aufgrund ihrer zwar geringen, aber trotzdem merklichen Flüchtigkeit unerwünscht sind.

Es ist somit Aufgabe der vorliegenden Erfindung, eine Zusammensetzung zur Hydrophobierung eines Substrats bereit zu stellen, die die aus dem Stand der Technik bekannten Nachteile überwindet. Insbesondere soll die Zusammensetzung eine Kombination unterschiedlicher Leistungseigenschaften ermöglichen und bevorzugt keine flüchtigen organischen Verbindungen enthalten, ohne dabei an hydrophobierender Wirkung einzubüßen.

Die Aufgabe wird gelöst durch eine Wasser-in-Öl-Emulsionszusammensetzung zur Hydrophobierung eines Substrats, wobei die Zusammensetzung umfasst:
(A) Wasser,
(B) zumindest einen Emulgator,
(C) mindestens eine erste Wirkstoffkomponente, die ausgewählt ist aus einem oder mehreren monomeren Alkylalkoxysilanen, Arylalkoxysilanen, Arylalkylalkoxysilanen, aminofunktionellen Alkoxysilanen und/oder Acrylatderivaten, und
(D) mindestens eine zweite Wirkstoffkomponente, die ausgewählt ist aus zumindest einem Kieselsäurederivat und/oder einem Wasserglas,
wobei die Zusammensetzung frei von organischen Lösungsmitteln ist.

Kieselsäuren sind Sauerstoffsäuren des Siliziums, wobei die einfachste Kieselsäure Monokieselsäure Si(OH)₄ ist. Wasserabspaltungen führen zu Verbindungen wie Dikieselsäure und Trikieselsäure. Kondensieren niedermolekulare Kieselsäuren weiter, bilden sich amorphe Kolloide, so genannte Kieselsole. Wassergläser sind amorphe, wasserlösliche Silikatsalze. Handelsübliche Wassergläser bestehen aus Lithium-, Natrium- und Kaliumsilikaten.

Bevorzugt ist, dass das Kieselsäurederivat und/oder Wasserglas in einer Wirkstoffkonzentration von unter 60 Gew.-%, bezogen auf die Gesamtzusammensetzung, vorliegt, bevorzugt in einer Konzentration von 1 - 60 Gew.-%, noch bevorzugter 1 - 50 Gew.-%.

Erfindungsgemäß bevorzugt ist dabei, dass die Zusammensetzung 10 - 90 Gew.-% Wasser (A), 0,1 - 10 Gew.-% Emulgator (B), 0,1 - 50 Gew.-% der ersten Wirkstoffkomponente (C) und 0,1 - 50 Gew.-% der zweiten Wirkstoffkomponente (D), bezogen auf die Gesamtzusammensetzung, umfasst.

Bevorzugt ist, dass der Emulgator (B) ausgewählt ist aus bekannten Wasser-in-Öl Emulgatoren (w/o), die bevorzugt einen HLB-Wert ≤ 6, bevorzugter 0,1 - 6, aufweisen, noch bevorzugter Emulgatoren auf Basis von modifizierten Organosiloxanen, wie Cetyl-PEG/PPG-10/1-Polydimethylsiloxan und Glyceryl/Lauryl-Polydimethylsiloxan, PEG1- bis PEG4-Stearyl, Cetyl, Oleyl- oder Laurylether oder Emulgator auf Basis von Polyglycerin wie Capryl-Caprin Triglycerid, oder Mischungen derselben.

Der HLB-Wert ist der Hydrophilic-Lipophilic-Balance-Wert, der auf dem Fachgebiet gut bekannt ist.

Im Rahmen der vorliegenden Erfindung soll es sich bei "bekannten w/o-Emulgatoren" um übliche anionische, kationische und nichtionische Emulgatoren handeln, welche zur Herstellung einer Wasser-in-Öl Emulsion geeignet sind.

Im Rahmen der vorliegenden Erfindung soll es sich bei "monomeren Alkylalkoxysilanen" um Verbindungen handeln, die einen oder zwei gleiche oder verschiedene, gegebenenfalls halogensubstituierte, verzweigte oder lineare C₁-C₂₀-Alkylreste, wie beispielsweise Methyl, Ethyl, n-Propyl oder Isopropyl, Butyl, Pentyl, Hexyl, Heptyl oder Octyl, aufweisen. Bei den übrigen Resten des Alkylalkoxysilans handelt es sich bevorzugt um C1-C6-Alkoxyreste, welche gegebenenfalls ebenfalls halogensubstituiert, verzweigt oder linear sein können. Besonders bevorzugt sind monomere Alkylalkoxysilane mit einer Alkylgruppe und drei Alkoxygruppen.

Erfindungsgemäß können auch Arylalkoxysilane eingesetzt werden, beispielsweise Phenylalkoxysilan, wobei ebenfalls vorzugsweise eine Arylgruppe mit 6-20 Kohlenstoffatomen und drei Alkoxyreste mit vorzugsweise 1-6 Kohlenstoffatomen vorliegen.

Erfindungsgemäß können als erste Wirkstoffkomponente auch Arylalkylalkoxysilane, wie Arylalkyldialkoxysilane, eingesetzt werden. Darüber hinaus sind auch aminofunktionelle Alkoxysilane, wie Aminopropyltriethoxysilan oder N(3-triethoxysilyl)propyl)butylamin denkbar.

Im Rahmen der vorliegenden Erfindung soll es sich bei "Acrylatderivaten" um niedermolekulare Acrylatpolymere handeln, welche gegebenenfalls halogensubstituiert, vorzugsweise fluorsubstituiert, vorliegen.

Ebenfalls bevorzugt ist, dass die mindestens eine erste Wirkstoffkomponente ausgewählt ist aus Octyltrimethoxysilan, Octyltriethoxysilan und fluorierten Acrylaten.

Es kann vorzugsweise vorgesehen sein, dass die mindestens eine zweite Wirkstoffkomponente ausgewählt ist aus Kieselsol oder Wasserglas, bevorzugt Lithium-, Natrium- und/oder Kaliumkieselsol oder Lithium-, Natrium- und/oder Kaliumwasserglas.

Als Kieselsol soll im Rahmen der vorliegenden Erfindung eine wässrige kolloidale Suspension von Polykieselsäure-Molekülen verstanden werden, vorzugsweise mit 30 % - maximal 60 % Siliziumdioxid.

Als Wasserglas werden aus einer Schmelze erstarrte, glasartige, wasserlösliche Alkalisilikate oder ihre wässrigen Lösungen bezeichnet, so spricht man beispielsweise von Natronwasserglas, Kaliwasserglas oder Lithiumwasserglas. Die Herstellung von Wasserglas ist auf dem Fachgebiet allgemein bekannt.

Erfindungsgemäß ist außerdem eine Verwendung der erfindungsgemäßen Zusammensetzung zur Hydrophobierung eines Substrats, wobei das Substrat ein poröser Baustoff, wie Beton, Ziegel, Putz, Estrich, Keramik, Dämmstoff, Mineralschaumplatte, Beschichtung, Holz und Holzwerkstoff, Papier/Pappe und Werkstoff aus Papier/Pappe, Naturstein oder Gestein ist.

Erfindungsgemäß ist die Zusammensetzung neben der Hydrophobierung eines Substrats auch zur Versiegelung, Imprägnierung, Verfestigung, Porenreduktion und zum Porenverschluss einsetzbar.

Überraschenderweise konnte erfindungsgemäß festgestellt werden, dass die Zusammensetzung zur Hydrophobierung eines Substrats sowohl eine Wirkung durch tiefes Eindringen der Zusammensetzung in das Substrat als auch eine Wirkung in den oberflächennahen Bereichen des Substrats zeigt. Insofern können die Eigenschaften von Hydrophobierungsmitteln auf Basis von Wasser-in-Öl-Emulsionen mit Lösungen, Emulsionen, Dispersionen oder Suspensionen zum Einsatz als Hydrophobierungsmittel, Verfestigungsmittel oder auch als Schutz vor biologischem Befall für mineralische Untergründe, wie Beton, Zement, Ziegel, Putz, oder auch saugfähige Untergründe, wie Holz oder Naturstein, kombiniert werden. Die erfindungsgemäße Zusammensetzung führt zu einem unterschiedlichen Verteilungsmechanismus der Komponenten der Zubereitung in bzw. auf dem Substrat. Während die Ölphase der Wasser-in-Öl-Emulsion in den Porenraum des Substrats eindringt und für eine Tiefenhydrophobierung sorgt, verbleiben feste oder auch flüssige Bestandteile der Zusammensetzung auf der Oberfläche des Substrats.

Die bei erfindungsgemäßer Verwendung mögliche ungleichmäßige Verteilung von mehreren Wirkstoffen in einem porösen Festkörper kann unter anderem die Vorteile aufweisen, dass das Kieselsäurederivat, vorzugsweise Kieselsol, als Feststoff auf der Oberfläche des Festkörpers auskristallisiert, jedoch gleichzeitig der Festkörper mit der zweiten Wirkstoffkomponente hydrophobiert wird. Hier kann es zur Ausbildung von starken hydrophoben Effekten kommen, beispielsweise kann ein Benetzungswinkel von < 120°C erreicht werden. Ein solcher Effekt ist bei ausschließlicher Verwendung von zum Beispiel Alkylalkoxysilanen nicht erreichbar, da dort die Oberflächentopologie des Festkörpers nicht modifiziert wird. Darüber hinaus ist erfindungsgemäß jedoch die Reduktion der Wasseraufnahme nicht auf die Festkörperoberfläche beschränkt, sondern findet auch in tieferen Festkörperschichten statt.

Die mit der erfindungsgemäßen Zusammensetzung erreichbare Tiefenimprägnierung der einen Wirkstoffkomponente kann darüber hinaus als Schutz vor von der Rückseite angreifenden Substanzen (zum Beispiel bauschädlichen Salzen) auf den an der Oberfläche des Festkörpers ausgebildeten Feststoffilm dienen.

Schließlich ist es erfindungsgemäß möglich, nicht nur die Oberfläche eines Festkörpers zu verfestigen, sondern auch tiefere Schichten des Festkörpers zu hydrophobieren. Dies wäre im Stand der Technik sonst nur in zwei separaten Arbeitsgängen durchführbar.

Insbesondere bei Einsatz von Wasserglas als zweite Wirkstoffkomponente ist es möglich, das Porenvolumen poröser Substrate zu reduzieren, während die erste Wirkstoffkomponente in tiefere Bereiche des Substrats eindringt und dort zu einer Hydrophobierung führt. Vorteilhaft kann auch auf flüchtige Bestandteile in der erfindungsgemäßen Zusammensetzung, wie organische Lösungsmittel, verzichtet werden, ohne dabei an hydrophobierender Wirkung der Zusammensetzung einzubüßen. Dies hat den bedeutenden Vorteil, dass die Zusammensetzung auch problemlos in Innenräumen verwendet werden kann.

Weitere Merkmale und Vorteile der Erfindung ergeben sich aus den folgenden Ausführungsbeispielen.

Zur Herstellung einer erfindungsgemäßen Zusammensetzung kann eine Mischung aus Emulgator und erster Wirkstoffkomponente in einem Mischbehälter vorgelegt und mittels einer Dissolverscheibe homogenisiert werden. In diese Mischung wird langsam Wasser zugegeben, so dass die sich bildende Emulsion homogen bleibt (also keine Agglomerationen, Koagulationen). Anschließend wird das Kieselsäurederivat ebenfalls langsam zugegeben. Die Mischung der Komponenten findet vorzugsweise bei Raumtemperatur statt.

### 1. Kombination von w/o-Emulsionen mit Natriumkieselsol:

- Triethoxyoctylsilan: 20 %
- Cetyl-PEG/PPG-10/1 Polydimethylsiloxan: 1 %
- Natriumkieselsol 30 % 300 cm²/g Oberfläche (z.B. Levasil 300/30%): 16 %
- Wasser: 63 %

Eindringprüfung in Beton nach EN 1504-2 (Penetrationsprüfung) Verbrauch 500 g/m²: 50 mm.

Es kommt zu einer Abscheidung feinstverteilter, weißer, extrem hydrophober Feststoffe auf der Baustoffoberfläche.

### 2. Kombination von w/o-Emulsionen mit Lithiumkieseisol;

- Triethoxyoctylsilan: 15 %
- Cetyl PEG/PPG-10/1 Polydimethylsiloxan: 0,5 %
- Lithiumkieselsol (LiSol 6) 25 %
- Wasser: 59,5 %

Eindringprüfung in Beton nach EN 1504-2 (Penetrationsprüfung), Verbrauch 500 g/m²: 45 mm

Es kommt zu einer Abscheidung feinstverteilter, weißer, extrem hydrophober Feststoffe auf der Baustoffoberfläche.

### 3. Kombination von w/o-Emulsionen mit Kaliwasserglas

- Triethoxyoctylsilan: 17 %
- Cetyl PEG/PPG-10/1 Polydimethylsiloxan: 0,7 %
- Kaliumwasserglas: 5 %
- Wasser: 77,3 %

Reduktion der Wasseraufnahme (ermittel nach DIN EN 1082-3) Vollziegel:
Unbehandelt: Wasseraufnahme +11 Gewichtsprozent
Behandelt: Wasseraufnahme: +6 Gewichtsprozent

Die Baustoffoberfläche wird mit einer glasartigen, silikatischen Schicht überzogen, während tiefere Bereiche bis zu ca. 10 mm hydrophobiert werden.

Die Ausführungsbeispiele 1 und 2 wurden einer Untersuchung zum Eindringverhalten in Beton nach EN 1504-2 unterzogen. Hierbei zeigte sich im Gegensatz zu herkömmlichen Imprägnierungen eine deutlich höhere Eindringtiefe von etwa 50 mm (Ausführungsbeispiel 1) und 45 mm (Ausführungsbeispiel 2), während zum Beispiel bekannte lösungsmittelhaltige Imprägnierungen (Wirkstoffgehalt etwa 10 % Silan/Siloxan in nicht aromatischem Kohlenwasserstoff) unter gleichen Prüfbedingungen etwa 8 mm tief in den Baustoff eindrang.

Untersuchungen zum Penetrationsverhalten der erfindungsgemäßen Zusammensetzungen zeigen, dass sich eine oder mehrere Wirkungsweisen, wie oben beschrieben, in diesen Zusammensetzungen kombinieren lassen.

Bei Zusammensetzungen unter Einsatz von auf Kieselsol basierten Kieselsäurederivaten findet beispielsweise eine Ablagerung der feinverteilten Siliziumdioxidpartikel auf der Substratoberfläche statt. Bei sehr hohen Verbräuchen, zum Beispiel etwa 500 g/m², lagern sich weißliche Siliziumdioxidschichten auf der Oberfläche ab. Bei einer geringeren Dosierung zeigt sich, dass die Ablagerung dieser Partikel zu einer Erhöhung des Kontaktwinkels von Wasser beim Aufsetzen eines Tropfens im Vergleich zu der Verwendung einer Zusammensetzung nur auf Basis von Triethoxyoctylsilanen führt. Gleichzeitig zeigt die Untersuchung einer mit einer erfindungsgemäßen Zusammensetzung behandelten Substratoberfläche, dass die Silankomponente in tiefere Bereiche des porösen Baustoffs eindringt, während die zweite Wirkstoffkomponente, das heißt daraus gebildete Partikel oder ein aus einer Lösung gebildeten Film, an der Oberfläche verbleibt.

Die in der vorstehenden Beschreibung und den Ansprüchen offenbarten Merkmale der Erfindung können sowohl einzeln als auch in beliebiger Kombination für die Verwirklichung der Erfindung in ihren unterschiedlichsten Ausführungsformen wesentlich sein.

## Patentansprüche

1. Wasser-in-Öl-Emulsionszusammensetzung zur Hydrophobierung eines Substrats, wobei die Zusammensetzung umfasst:
(A) Wasser,
(B) zumindest einen Emulgator,
(C) mindestens eine erste Wirkstoffkomponente, die ausgewählt ist aus einem oder mehreren monomeren Alkylalkoxysilanen, Arylalkoxysilanen, Arylalkylalkoxysilanen, aminofunktionellen Alkoxysilanen und/oder Acrylatderivaten und
(D) mindestens eine zweite Wirkstoffkomponente, die ausgewählt ist aus zumindest einem Kieselsäurederivat und /oder einem Wasserglas,
wobei die Zusammensetzung frei von organischen Lösungsmitteln ist.

2. Zusammensetzung zur Hydrophobierung eines Substrats nach Anspruch 1, wobei das Kieselsäurederivat und/oder Wasserglas in einer Wirkstoffkonzentration von unter 60 Gew.-%, bezogen auf die Gesamtzusammensetzung, vorliegt, bevorzugt in einer Konzentration von 1 - 60 Gew.-%, noch bevorzugter 1 - 50 Gew.-%.

3. Zusammensetzung zur Hydrophobierung eines Substrats nach Anspruch 1 oder 2, wobei der Emulgator (B) ausgewählt ist aus Wasser-in-öl Emulgatoren (w/o), die bevorzugt einen HLB-Wert ≤ 6, bevorzugter 0,1 - 6, aufweisen, noch bevorzugter Emulgatoren auf Basis von modifizierten Organosiloxanen, wie Cetyl-PEG/PPG-10/1-Polydimethylsiloxan und Glyceryl/Lauryl-Polydimethylsiloxan, PEG1- bis PEG4-Stearyl-, Cetyl, Oleyl- oder Laurylether oder Emulgator auf Basis von Polyglycerin wie Capryl-Caprin Triglycerid, oder Mischungen derselben.

4. Zusammensetzung zur Hydrophobierung eines Substrats nach einem der vorangehenden Ansprüche, wobei die mindestens eine erste Wirkstoffkomponente ausgewählt ist aus Octyltrimethoxysilan, Octyltriethoxysilan und fluorierten Acrylaten.

5. Zusammensetzung zur Hydrophobierung eines Substrats nach einem der vorangehenden Ansprüche, wobei die mindestens eine zweite Wirkstoffkomponente ausgewählt ist aus Kieselsol oder Wasserglas, bevorzugt Lithium-, Natrium- und/oder Kaliumkieselsol oder Lithium-, Natrium- und/oder Kaliumwasserglas.

6. Verwendung der Zusammensetzung nach einem der vorangehenden Ansprüche zur Hydrophobierung eines Substrats, wobei das Substrat ein poröser Baustoff, wie Beton, Ziegel, Putz, Estrich, Keramik, Dämmstoff, Mineralschaumplatte, Beschichtung, Holz und Holzwerkstoff, Papier/Pappe und Werkstoff aus Papier/Pappe, Naturstein oder Gestein ist.

## Claims

1. Water-in-oil emulsion composition for the hydrophobization of a substrate, where the composition comprises:
(A) water,
(B) at least one emulsifier,
(C) at least a first active ingredient component, which is selected from one or more monomeric alkylalkoxysilanes, arylalkoxysilanes, arylalkylalkoxysilanes, aminofunctional alkoxysilanes and/or acrylate derivatives and
(D) at least a second active ingredient component, which is selected from at least one silicic acid derivative and/or one water glass,
where the composition is free from organic solvents.

2. Composition for the hydrophobization of a substrate in accordance with Claim 1, where the silicic acid derivative and/or water glass is present in an active ingredient concentration of less than 60 wt%, based on the total composition, preferably in a concentration of 1-60 wt%, and even more preferably 1-50 wt%.

3. Composition for the hydrophobization of a substrate in accordance with Claim 1 or 2, where the emulsifier (B) is selected from water-in-oil emulsifiers (w/o) which have an HLB value of ≤6, and preferably 0.1 - 6, and even more preferably emulsifiers based on modified organosiloxanes, such as cetyl-PEG/PPG-10/1-polydimethylsiloxane and glyceryl/lauryl polydimethylsiloxane, PEG1 to PEG4-stearyl, cetyl, oleyl or lauryl ether or an emulsifier based on polyglycerols such as caprylic capric triglyceride, or mixtures thereof.

4. Composition for the hydrophobization of a substrate in accordance with one of the preceding claims, where the at least first active ingredient component is selected from octyltrimethoxysilane, octyltriethoxysilane and fluorinated acrylates.

5. Composition for the hydrophobization of a substrate in accordance with one of the preceding claims, where the at least second active ingredient component is selected from silica sol or water glass, preferably lithium, sodium and/or potassium silica sol or lithium, sodium and/or potassium water glass.

6. Use of the composition in accordance with one of the preceding Claims for the hydrophobization of a substrate, where the substrate is a porous building material, such as concrete, brick, plaster, screed, ceramic, insulating material, mineral foam panel, coating, timber and wood-based material, paper/cardboard and paper/cardboard-based material, natural stone or rock.

## Revendications

1. Composition d'émulsion eau-dans-huile pour l'hydrophobisation d'un substrat, où la composition comprend:
(A) de l'eau,
(B) un ou plusieurs émulsifiants,
(C) un ou plusieurs premiers composants d'ingrédients actifs qui sont sélectionnés parmi un ou plusieurs alkylalkoxysilanes monomères, alkylalkoxysilanes, arylalkoxysilanes, arylalkylalkoxysilanes, alkoxysilanes aminofonctionnels et/ou des dérivés d'acrylate et
(D) un ou plusieurs deuxièmes composants d'ingrédients actifs qui sont sélectionnés parmi un dérivé d'acide silicique et/ou un verre soluble,
où la composition est exempte de solvants organiques.

2. Composition pour l'hydrophobisation d'un substrat selon la revendication 1, où le dérivé d'acide silicique et/ou verre soluble est présent dans une concentration d'ingrédient actif égale ou inférieure à 60 % en poids, sur la base de la composition totale, de préférence dans une concentration de 1-60 % en poids, et plus préférablement de 1-50 % en poids.

3. Composition pour l'hydrophobisation d'un substrat selon la revendication 1 ou 2, où l'émulsifiant (B) est sélectionné parmi des émulsifiants eau-dans-huile (w/o) qui ont une valeur HLB ≤6, et de préférence 0,1 - 6, et encore plus préférablement des émulsifiants à base d'organosiloxanes modifiés tels que cétyle-PEG/PPG-10/1-polydiméthylsiloxane et glycéryl/lauryl polydiméthylsiloxane, stéaryle PEG1 à PEG4, cétyle, oléyle ou éther de lauryle ou un émulsifiant à base de polyglycérols tel que triglycéride caprylique/caprique, ou des mélanges de ces derniers.

4. Composition pour l'hydrophobisation d'un substrat selon l'une quelconque des revendications précédentes, où le ou les premiers composants d'ingrédients actifs sont sélectionnés parmi l'octyltriméthoxysilane, l'octyltriéthoxysilane et des acrylates fluorés.

5. Composition pour l'hydrophobisation d'un substrat selon l'une quelconque des revendications précédentes, où le ou les deuxièmes composants d'ingrédients actifs sont sélectionnés parmi un sol de silice ou verre soluble, de préférence un sol de silice de lithium, sodium et/ou potassium, ou un verre soluble de sodium et/ou potassium.

6. Utilisation de la composition selon l'une quelconque des revendications précédentes pour l'hydrophobisation d'un substrat, où le substrat est un matériau de construction poreux, tel que : béton, brique, plâtre, chape, céramique, matériau isolant, panneau en mousse minérale, revêtement, bois et matériau à base de bois, papier/carton et matériau à base de papier/carton, pierre ou rocher naturel.
